# NEUE EUROPÄISCHE PATENTSCHRIFT

(11) **EP 2 740 672 B2**
(45) Veröffentlichungstag und Bekanntmachung des Hinweises auf die Entscheidung über den Einspruch: **22.01.2020**
(45) Hinweis auf die Patenterteilung: 07.12.2016
(21) Anmeldenummer: 13002228.8
(22) Anmeldetag: 26.04.2013
(51) Int. Cl.: B65B 9/04, B65B 61/02, B65B 57/04, B65B 47/00, B65B 59/00, B65B 61/06

(54) **Tiefziehverpackungsmaschine mit taktgenauer Positionierung einer Siegelstation und entsprechendes Verfahren**
Deep draw packaging machine with clock cycled positioning of a sealing station and corresponding method
Machine d'emballage par emboutissage avec positionnement cyclique précis d'un poste de scellage et méthode correspondante

(30) Priorität: 04.12.2012 EP 12008109
(43) Veröffentlichungstag der Anmeldung: 11.06.2014
(73) Patentinhaber: MULTIVAC Sepp Haggenmüller SE & Co. KG, 87787 Wolfertschwenden (DE)
(72) Erfinder: Ehrmann, Elmar, 87730 Bad Grönenbach (DE); Lau, Christian, Dr., 88178 Heimenkirch (DE); Botzenhardt, Claus, 87439 Kempten (DE)
(74) Vertreter: Grünecker Patent- und Rechtsanwälte PartG mbB

(56) Entgegenhaltungen:
- EP-A1- 0 569 933
- EP-A2- 0 999 130
- WO-A1-02/081181
- DE-A1- 4 041 547
- DE-A1-102011 108 939
- DE-C1- 4 017 923
- DE-T2- 68 903 266
- DE-T2- 69 002 930
- DE-U1- 20 309 826
- DE-U1-202010 004 162
- GB-A- 1 296 251
- JP-A- 2001 277 191
- US-A- 4 773 839
- US-A- 5 667 123
- US-A1- 2005 067 083
- US-A1- 2008 190 076
- US-A1- 2012 311 975
- Walcher, H.: "Winkel- und Wegmessung im Maschinenbau", VDI Verlag pages 1-3, 78-81, 127-130,

## Beschreibung

Die Erfindung bezieht sich auf eine Tiefziehverpackungsmaschine gemäß den Merkmalen des Anspruchs 1 und auf ein Verfahren zum Betrieb der Tiefziehverpackungsmaschine gemäß den Merkmalen des Anspruchs 9.

Aus der EP 0 569 933 A1 sind Tiefziehverpackungsmaschinen mit in Produktionsrichtung verstellbaren Arbeitsstationen, beispielsweise eine Form-, Siegel-, und Schneidstation, bekannt, die in Abhängigkeit der Position einer Druckmarke auf einer Unterfolie verstellt werden können, wobei die Druckmarke mittels eines Druckmarkensensors vor der Formstation erfasst wird. Die Arbeitsstationen weisen motorische Verstellantriebe mit Wegmesseinrichtungen auf. Sich veränderbare Abstände zwischen aufeinanderfolgenden Druckmarken werden mittels des Druckmarkensensors von der Steuerung ermittelt und die Position der Form-, Siegel- und Schneidstation entsprechend geregelt, um die Abstände der Arbeitsstationen untereinander anzupassen. Damit soll erreicht werden, dass die Formstation Mulden passend zur Position der Druckmarke formt, die Siegelstation Siegelnähte entsprechend der Lage der Mulden erzeugt und die Schneidstation die gesiegelten Packungen passend zu den Siegelnähten schneidet und die Packungen vereinzelt.

Eine Verstellung der Siegelstation nach Erfassen einer Druckmarke wirkt sich erst viele Vorschübe oder Vorzüge der erfassten Druckmarke später aus, da zwischen der Formstation und der Siegelstation eine Einlegestrecke zum Einlegen von zu verpackenden Produkten in die geformten Mulden vorgesehen ist. Dabei bleiben negative Einflüsse durch unregelmäßige Folienschrumpfung oder Toleranzen bei Vorschubbewegungen der Vorschubketten unberücksichtigt. Die Folge ist eine großzügige Auslegung der Breite der Packungsstege und -ränder in Vorschubrichtung, damit die Siegelnaht auf den Rändern mit einer ausreichenden Breite erzeugt werden kann und nach dem anschließenden Schneidvorgang die Siegelnaht noch eine Breite aufweist, um eine gewünschte Siegelqualität zu erreichen. Diese großzügige Auslegung führt zu einem erhöhten Folienverbrauch durch eine große Menge von Folienabfall.

Aus der DE 24 37 127 A1 ist eine weitere Verpackungsmaschine bekannt, bei der ein Druckmarkensensor für die Oberfolie verwendet wird. Dieser Druckmarkensensor ist genau so weit vor der Siegelstation angeordnet, wie auch die Formstation vor der Siegelsta-Siegelstation angeordnet ist, sodass der Druckmarkensensor stets genau die Druckmarke erfasst, die dem Folienabschnitt entspricht, der zu der gerade im selben Maschinenzyklus geformten unteren Form gehört.

Die GB 1 296 251 offenbart eine Vorrichtung, bei der bereits das Verformen einer Unterfolie an einen zuvor aufgebrachten Aufdruck angepasst werden soll. Zu diesem Zweck sind Photozellen vorgesehen, die passend zum Aufdruck auf der Folie aufgebrachte Markierungen erkennen, um anschließend die Position u.a. der Formstation und einer Siegelstation anpassen zu können.

Bei der DE 20 2010 004 162 U1 werden während des Siegelvorgangs Kennzeichnungen in die Siegelnähte eingebracht, um später eine Qualitätskontrolle versiegelter Verpackungen zu erlauben.

Die nicht vorveröffentliche DE 10 2011 108 939 beschreibt ferner eine Verpackungsmaschine, bei der die Lage von Siegelnähten erfasst wird, um anschließend eine Schneideinrichtung passend zu der Lage der Siegelnähte ausrichten zu können.

Aufgabe der vorliegenden Erfindung ist es, eine Tiefziehverpackungsmaschine in Bezug auf den Folienverbrauch zu verbessern.

Diese Aufgabe wird gelöst durch eine Tiefziehverpackungsmaschine mit den Merkmalen des Anspruchs 1 bzw. durch ein Verfahren zum Betrieb einer solchen Tiefziehverpackungsmaschine mit den Merkmalen des Anspruchs 9. Vorteilhafte Weiterbildungen der Erfindung sind in den Unteransprüchen angegeben.

Die erfindungsgemäße Tiefziehverpackungsmaschine arbeitet im Betrieb mit einer bestimmten Vorschublänge pro Arbeitstakt. Sie umfasst eine Formstation zum Formen von Mulden in eine Unterfolie, eine Siegelstation, vorzugsweise eine Schneidstation und eine Steuerung, wobei die Siegelstation eine Verstelleinrichtung entlang einer Produktionsrichtung und eine Wegmesseinrichtung aufweist. Erfindungsgemäß ist an der Siegelstation oder innerhalb einer Vorschublänge vor der Siegelstation, d. h. innerhalb maximal einer Vorschublänge vor der Siegelstation, ein Messsystem zum Ermitteln der Lage des Referenzelements vorgesehen und die Steuerung ist dazu konfiguriert, die Siegelstation entsprechend der ermittelten Lage des Referenzelements zu den Mulden mittels der Verstelleinrichtung zu positionieren. Erfindungsgemäß wird die Lage der Mulden ermittelt, die sich bereits in der Siegelstation befinden, wenn die Vorschubbewegung der Unterfolie bzw. der Mulden abgeschlossen ist. Eine Ermittlung der Lage des Referenzelements bei einer stillstehenden Unterfolie bringt den Vorteil, dass Ungenauigkeiten in der Positionierung der Unterfolie bzw. der Mulden in die Siegelstation zum Ende der Vorschubbewegung hin berücksichtigt werden und Ungenauigkeiten einer dynamischen Erfassung des Referenzelements noch während der Vorschubbewegung eliminiert werden können. Die Lageregelung in der Endposition bei der Vorschubbewegung der Unterfolie mittels eines Servoantriebs kann vereinfacht werden, ebenso wie die Erfassung des Referenzelements.

Dies bringt den Vorteil mit sich, dass die Siegelstation immer exakt in Bezug auf die Lage der zu siegelnden Mulden positioniert werden kann. Somit sind keine Toleranzen bezüglich Vorschubunterschieden mehr zu berücksichtigen und die für die Siegelung notwendige Fläche des Packungsrands kann auf ein Minimum reduziert werden. In Folge kann die Länge eines Folienvorschubs reduziert werden oder es können die Packungsabmessungen in Vorschubrichtung vergrößert werden, was zu einer Reduzierung des Folienabfalls führt.

Bevorzugt ist das Messsystem zum berührungslosen Ermitteln der Lage des Referenzelements vorgesehen.

Erfindungsgemäß ist eine Vorrichtung vor (d.h. stromaufwärts) der Formstation angeordnet, um ein Referenzelement in die Unterfolie einzubringen, wobei mittels einer Erfassung des Referenzelements über das Messsystem die Lage der Mulden erfassbar ist. Die Vorrichtung ist bevorzugt mit der Formstation gekoppelt. Zum einen können die Formstation und die Vorrichtung mittels eines gemeinsamen Antriebs angetrieben werden, zum anderen weist das Referenzelement einen gegenüber den im selben Arbeitstakt geformten Mulden festgelegten und gleichbleibenden Abstand auf. Somit existiert ein fester Bezug zwischen der Lage der Mulden eines gemeinsamen Taktes und dem zugehörigen Referenzelement. Dies ermöglicht den Einsatz von kostengünstigen Messsystemen, da lediglich das Referenzelement erfasst werden muss, da die Mulden eine vorgegebene Lage zu dem Referenzelement aufweisen. Das Referenzelement kann beispielsweise eine durch die Vorrichtung erzeugte Ausstanzung in Form eines Loches oder ein Prägen eines Noppens sein. Denkbar sind auch mehrere schmale Ausstanzungen, die z. B. beidseitig der Mulden nahe einer jeweils an beiden Seiten vorgesehenen Klammerkette zum Folientransport angebracht sind. Hierfür sind vor oder an der Siegelstation zwei Messsysteme vorgesehen, um solche Referenzelemente von beiden Seiten zu erfassen.

Das Messsystem weist bevorzugt eine Kamera oder einen Reflextaster, beispielsweise eine Lichtschranke auf. Der Reflextaster ist vor allem geeignet, um ein Referenzelement in Form einer Ausstanzung erfassen zu können. Besonders zum Erfassen der Lage des Referenzelementes im Stillstand nach einer Vorschubbewegung der Unterfolie und damit der Mulden eignet sich die Kamera.

Gemäß einer besonderen Ausführungsform ist die Wegmesseinrichtung der Siegelstation ein magnetostriktiver Lineargeber, um eine hygienegerechte Ausführung bereitzustellen. Ein solcher Lineargeber arbeitet berührungslos mit einem Messaufnehmer derart zusammen, dass selbst der Spalt zwischen Lineargeber und Messaufnehmer leicht reinigbar und beständig gegenüber üblichen Reinigungsmitteln ist.

Bevorzugt ist ein Verstellweg der Siegelstation bis 1000 mm, vorzugsweise größer als 300 mm vorgesehen, um nicht nur Schwankungen in und entgegen der Produktionsrichtung auszugleichen, sondern beispielsweise die Siegelstation auch in eine Werkzeugwechselposition verfahren zu können, in der ein Siegelwerkzeugunter und/oder -oberteil seitlich oder nach oben aus der Tiefziehverpackungsmaschine zu Wartungs-, Reinigungs- oder Wechselzwecken entnehmbar ist.

In einer vorteilhaften Ausführung ist ein weiteres Messsystem zum berührungslosen Ermitteln der Lage der Mulden, die in einem nächsten Arbeitstakt der Schneidstation zugeführt werden, vorgesehen und die Steuerung ist dazu konfiguriert, die Schneidstation entsprechend der ermittelten Lage der Mulden taktgenau in ihrer Position zu den Mulden mittels einer weiteren Verstelleinrichtung zu regeln. Dies stellt sicher, dass auch die Schneidstation taktgenau in Bezug auf die Lage der Mulden oder der in der Siegelstation erzeugten Siegelnähte positioniert werden kann. Denkbar ist bei einer direkt nach der Siegelstation angeordneten Schneidstation, dass die Steuerung die Schneidstation anhand der Erfassung der Mulden bzw. des oder der Referenzelemente positioniert.

In einer weiteren besonderen Ausführungsform ist mittels der Steuerung eine Tendenzregelung für die Formstation vorgesehen. Der Begriff Tendenzregelung bedeutet, dass eine wiederholt nacheinander in nur eine Richtung ausgeführte Positionierung der Siegelstation von der Steuerung erkannt wird und dazu entgegensteuernd die Steuerung die Formstation so in der Gegenrichtung verstellt, dass eine weitere in eine Richtung fortlaufende Positionierung der Siegelstation vermieden werden kann.

Vorzugsweise ist die Formstation und/oder die Siegelstation in eine Werkzeugwechselposition in oder gegen der Produktionsrichtung verfahrbar, um diese in eine bezogen auf die Tiefziehverpackungsmaschine seitlich zugängliche Position zu verstellen, um einen Werkzeugwechsel ergonomisch und ohne Einfluss auf eine Folie vornehmen zu können.

Das erfindungsgemäße Verfahren zum Betrieb einer Tiefziehverpackungsmaschine, die eine Formstation zum Formen von Mulden in eine Unterfolie, eine Siegelstation und eine Steuerung umfasst, sieht vor, dass eine Vorrichtung ein Referenzelement in die Unterfolie einbringt und mittels eines Messsystems die Lage des Referenzelements und damit zumindest indirekt auch die Lage der Mulden ermittelt wird und die Steuerung mittels einer Verstelleinrichtung die Siegelstation in einer vorgegebenen bzw. vorgebbaren Position zu den Mulden positioniert. Es wird die Lage der Mulden ermittelt, die sich bereits in der Siegelstation befinden und die Vorschubbewegung abgeschlossen haben. Somit kann die Siegelstation immer exakt in Bezug auf die Lage der zu siegelnden Mulden positioniert werden und Toleranzen unberücksichtigt gelassen werden, welches zu einer Reduzierung des Folienverbrauchs führt.

Das Messsystem erfasst ein Referenzelement, das in die Unterfolie mittels einer Vorrichtung, die vor der Formstation angeordnet ist, eingebracht wurde, um die Lage der Mulden in die Steuerung zu ermitteln.

Die Steuerung ermittelt aus einer sich verändernden Lage der Mulden bevorzugt eine Tendenz und passt die Position der Formstation mittels einer weiteren Verstelleinrichtung in Bezug auf eine Produktionsrichtung an. Als Variante kann auch ein Parameter für die Länge der intermittierenden Vorschübe in der Steuerung angepasst werden.

Im erfindungsgemäßen Verfahren erfasst die Steuerung mittels einer längs zur Produktionsrichtung ausgerichteten Wegmesseinrichtung der Verstelleinrichtung die Position der Siegelstation.

Als eine weitere Variante zur berührungslosen Ermittlung der Lage der Mulden ist eine mechanische Abtasteinrichtung denkbar, um eine Ausstanzung oder einen Noppen als Referenzelement abzutasten.

Bevorzugt erfasst eine Kamera die Lage des Referenzelements im Stillstand nach einer Vorschubbewegung der Unterfolie mittels einer Folientransportkette. Bei einer solchen Erfassung des Referenzelements im anschließenden Stillstand kann eine Berücksichtigung der Vorschubbewegung der Folientransportkette entfallen und dadurch die Genauigkeit der Positionierung der Siegelstation weiter erhöht werden. Ungenauigkeiten bzw. unterschiedliche Positionierungen der Folientransportkette, die durch unterschiedliche Reibungsverhältnisse entlang der Führungen der Folientransportkette auftreten, werden komplett berücksichtigt, da die Erfassung der Lage des Referenzelements und damit auch die Lage der Mulden erst anschließend an die Positionierung der Folientransportketten im Stillstand der zu versiegelnden Mulden durchgeführt wird.

Denkbar ist auch die Möglichkeit, dass der Bediener Sollpositionen als Vorgabe für verschiedene Formwerkzeuge und damit auch mögliche unterschiedliche Vorschublängen in Programmen für die Prozesse in der Steuerung abzuspeichern.

Im Folgenden wird ein vorteilhaftes Ausführungsbeispiel der Erfindung anhand einer Zeichnung näher erläutert. Im Einzelnen zeigen:
- Fig. 1: Eine nicht erfindungsgemäße Tiefziehverpackungsmaschine in einer schematischen Seitenansicht,
- Fig. 2: eine Teildarstellung einer Siegelstation in einer perspektivischen Ansicht,
- Fig. 3: eine Draufsicht auf die Unterfolie vor, in und nach der Siegelstation,
- Fig. 4: eine weitere Ausführung einer nicht erfindungsgemäßen Tiefziehverpackungsmaschine in einer schematischen Seitenansicht und
- Fig. 5: eine Draufsicht auf die Formstation.

Gleiche Komponenten sind in den Figuren durchgängig mit gleichen Bezugszeichen versehen.

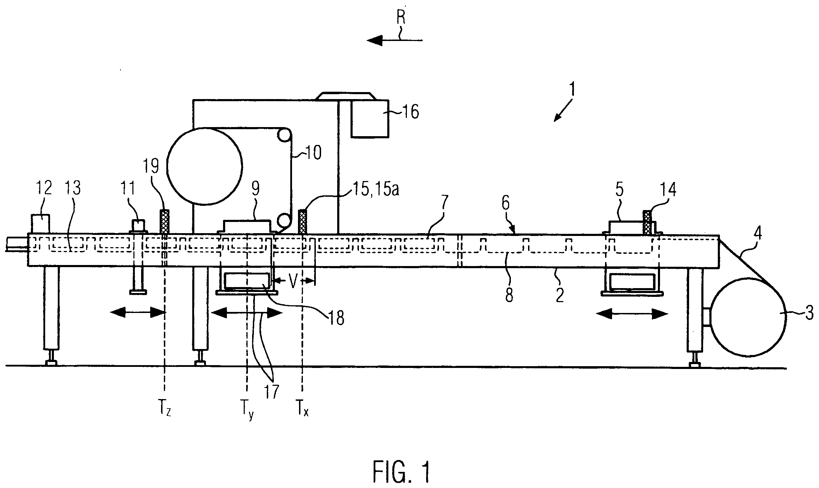

Fig. 1 zeigt eine taktweise arbeitende Tiefziehverpackungsmaschine 1 mit einem Maschinenrahmen 2, der entlang einer Produktionsrichtung R ausgerichtet ist. Am rechts in der Fig.1 gezeigten Anfang der Tiefziehverpackungsmaschine 1 ist eine Abrollvorrichtung 3 für eine Unterfolie 4 vorgesehen. Die Unterfolie 4 wird mittels zweier nicht näher dargestellter Vorschubketten mit einer Vorschublänge V pro Arbeitstakt in Produktionsrichtung R einer Formstation 5 zugeführt. Des Weiteren ist eine Einlegestrecke 6 zum Einlegen eines Produkts 7 in geformte Mulden 8 stromabwärts nach der Formstation 5 gezeigt. Im weiteren Produktionsverlauf folgen eine Siegelstation 9 zum Verschließen der mit Produkt 7 gefüllten Mulden 8 mit einer Deckelfolie 10 und eine erste Schneidstation 11, die als Querschneidung ausgeführt ist. Eine zweite Schneideinrichtung 12, die nach der ersten Schneideinrichtung 11 stromabwärts angeordnet ist, ist als Längsschneidung ausgeführt und vereinzelt die Verpackungen 13.

Es können mehrere in Produktionsrichtung R geformte Mulden 8 in der Unterfolie angeordnet sein, die als Format mit beispielsweise drei nebeneinander angeordneten Mulden 8 um jeweils eine Mulde 8 in einem Takt intermittierend stromabwärts transportiert werden. Es ist aber ebenso denkbar, dass die Formstation 5 mehrere Reihen von Mulden 8 formt und jeweils dieses Format von Mulden 8, die in einem Arbeitstakt in der Formstation 5 in die Unterfolie 4 geformt werden, taktweise in Produktionsrichtung R weiter transportiert wird.

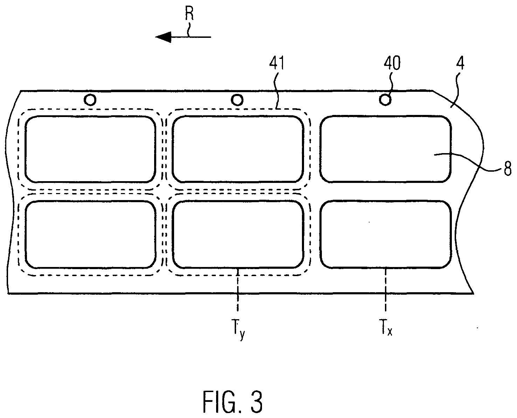

Im Folgenden soll die Arbeitsweise der gezeigten Tiefziehverpackungsmaschine 1 näher erläutert werden. Die von der Abrollvorrichtung 3 abgerollte Unterfolie 4 wird von den Vorschubketten beidseitig erfasst und der Formstation 5 zugeführt. In der Formstation 5 werden eine oder mehrere Mulden 8 in die Unterfolie 4 geformt und in definierter Position relativ zu den Mulden 8 ein Referenzelement 40 (siehe Fig. 3) mittels einer Stanzvorrichtung 14 in die Unterfolie 4 in einem Bereich eingebracht, der außerhalb der Mulden 8 und außerhalb oder zwischen später erzeugten Siegelnähten 41 liegt. Beispielsweise kann es sich bei dem Referenzelement 40 um ein Loch mit einem Durchmesser von 5 mm handeln.

Im nächsten Arbeitstakt wird die Unterfolie 4 mit den geformten Mulden 8 intermittierend entlang der Einlegestrecke 6 weitertransportiert. Dabei werden die Mulden 8 manuell oder automatisch beispielsweise mittels Pickern mit Produkten 7 gefüllt. In einem Takt Tx direkt vor Erreichen der Siegelstation 9, d. h. maximal eine Vorschublänge V vor der Siegelstation 9, ist ein Messsystem 15 oberhalb der Unterfolie 4 angebracht, um das Referenzelement 40 während der taktweisen Vorschubbewegung der Unterfolie 4 erfassen oder im Stillstand die Lage des Referenzelements 40 beispielsweise mittels einer Kamera 15a zu ermitteln.

Die Information über die Lage des Referenzelements 40 im Takt Tx wird einer Steuerung 16 übermittelt. In der Steuerung 16 ist die Lage der Mulde 8 zum Referenzelement 40 hinterlegt, so dass die Steuerung 16 die Siegelstation 9 für den Takt Ty mittels einer Verstelleinrichtung 17 so verstellt, dass die Mulden 8, die im Takt Tx erfasst wurden, im folgenden Takt Ty in der Siegelstation 9 exakt mit dieser bezüglich ihrer Lage korrespondieren. Die Verstelleinrichtung 17 wird betätigt, nachdem der Siegelvorgang zum Ansiegeln der Deckelfolie 10 auf die Unterfolie 4 abgeschlossen wurde und sich ein Siegelwerkzeugunterteil 18 nach unten aus dem Kollisionsbereich der Mulden 8 entfernt hat, um die nächste Vorschubbewegung der Unterfolie 8 zuzulassen.

Somit bezieht sich die Verstellung der Siegelstation 9 immer taktgenau auf die im Takt zuvor erfasste Lage der Mulden, da die Erfassung der Mulden 8 im Takt Tx eine Verstellung der Siegelstation 9 im direkt nachfolgenden Takt Ty zur Folge hat.

Die Steuerung 16 kann zusätzlich zur Verstellung der Siegelstation 9 auch eine Verstellung der ersten Schneidstation 11 ausführen, um die Verpackungen 13 bzw. die Unterfolie 4 und die Deckelfolie 10 direkt an der Siegelnaht 41 quer zur Produktionsrichtung R ausgerichtet teilweise herauszutrennen. Hierzu kann die Erfassung der Mulden 8 im Takt Tx mittels des Messsystems 15 vor der Siegelstation 9 vorgesehen sein, oder ein weiteres Messsystem 19 im Takt Tz vor der Schneidstation 11 ermittelt die Lage der Mulden 8 oder der in der Siegelstation 9 erzeugten Siegelnähte 41 (siehe Figur 3). Die zum Ende der Tiefziehverpackungsmaschine 1 angeordnete zweite Schneideinrichtung 12 ist als Längsschneidung ausgebildet und trennt die Verpackungen 13 längs zur Produktionsrichtung R aus, so dass die Verpackungen 13 vereinzelt dem weiteren Produktionsprozess zugeführt werden können.

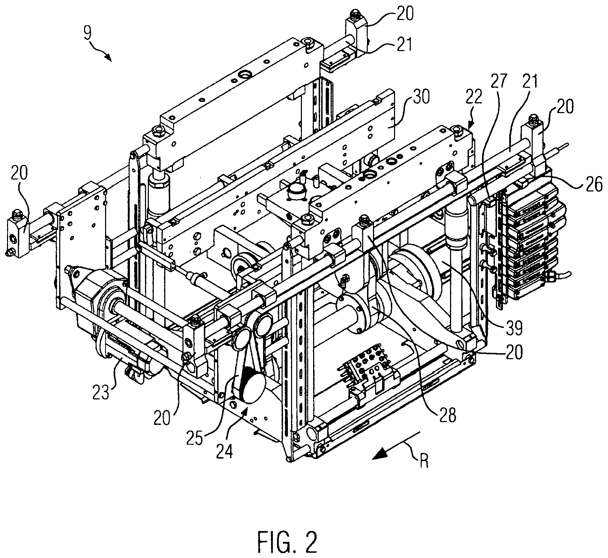

In Figur 2 ist die Siegelstation 9 ohne ein Siegelwerkzeugoberteil und das Siegelwerkzeugunterteil 18 dargestellt. Über sechs Befestigungselemente 20 ist die Siegelstation 9 am Maschinenrahmen 2 angebracht. Entlang von Führungsschienen 21 ist eine Hubeinrichtung 22 in und entgegen der Produktionsrichtung R bewegbar. Über einen Servoantrieb 23 und ein Riemengetriebe 24 ist die Hubeinrichtung 22 relativ zum Maschinenrahmen 2 mittels eines Zahnriemens 25 längs der Produktionsrichtung R verstellbar. Die Position der Siegelstation 9 bzw. der Hubeinrichtung 22 ist gegenüber dem Maschinenrahmen 2 über eine Wegmesseinrichtung 26 erfassbar, wobei die Wegmesseinrichtung 26 ein magnetostriktiver berührungslos arbeitender Lineargeber ist, der entlang des Maschinenrahmens 2 ausgerichtet ist. Ein zugehöriger Messaufnehmer 27 ist an der Hubeinrichtung 22 angebracht. Die Hubeinrichtung 22 weist ein Kniehebelhubwerk 28 mit einem Servoantrieb 29 auf, um das (nicht in Fig. 2 dargestellte) Siegelwerkzeugunterteil 18, das auf den Aufnahmen 30 vorgesehen ist, vertikal anzuheben und abzusenken.

Fig. 3 zeigt in einer Draufsicht auf die Unterfolie 4 jeweils zwei Mulden 8, die zweispurig angeordnet sind, und einen einreihigen Takt beziehungsweise Vorschub. Das Referenzelement 40 befindet sich am in Produktionsrichtung R gesehen rechten Rand der Unterfolie 4 neben bzw. außerhalb der Siegelnaht 41. Der Takt Tx vor der Siegelstation 9 geht mit einem Vorschub in den nächsten Takt Ty in der Siegelstation über.

Anhand der Fig. 1 wird eine Tendenzregelung für die Formstation 5 näher erläutert. Stellt die Steuerung 16 fest, dass mehrmals hintereinander die Siegelstation 9 in die wiederholt gleiche Richtung verstellt wurde, so kann die Formstation 5 mittels einer eigenen Verstell-einrichtung in entgegengesetzter Richtung verstellt werden, um eine fortlaufende Verstellung der Siegelstation 9 in nur einer Richtung zu minimieren oder zu beenden. Die Verstellung der Siegelstation 9 dient in erster Linie dazu, Unregelmäßigkeiten im Vorschub der Unterfolie 4 oder Unregelmäßigkeiten in der Unterfolie 4 selbst auszugleichen, indem auf die Lage der Mulde 8 taktgenau Bezug genommen wird.

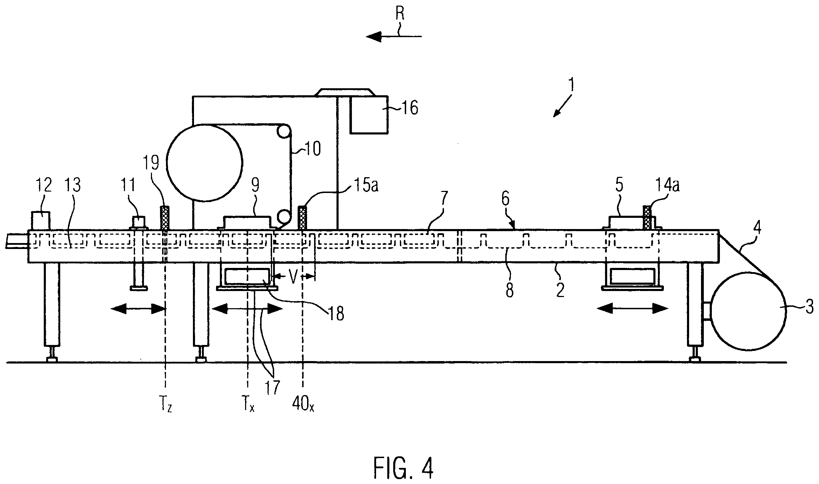

Fig. 4 zeigt eine Variante der in Fig. 1 dargestellten Tiefziehverpackungsmaschine 1. Eine Vorrichtung 14a zum Erzeugen eines Referenzelements 40x, 40y ist erfindungsgemäß und abweichend von der Darstellung in Fig. 4 vor der Formstation 5 angeordnet und mit der Formstation 5 mechanisch verbunden. In einem Arbeitstakt werden zugleich in der Formstation 5 Mulden 8 eines Taktes Tx tiefgezogen, während die Vorrichtung 14a ein Referenzelement 40x am rechten Rand der Unterfolie 4 einformt. Die zwei nebeneinander angeordneten Mulden 8 des Taktes Tx haben einen definierten Abstand zu dem zugeordneten Referenzelement 40x. Dieser Abstand ist in die Steuerung 16 eingebbar, und wird bei der Erfassung des Referenzelements 40x vor der Siegelstation 9 mittels einer Kamera 15a in der Steuerung 16 verrechnet, um die Siegelstation 9 entsprechend der darin befindlichen Mulden 8 des Taktes Tx zu positionieren.

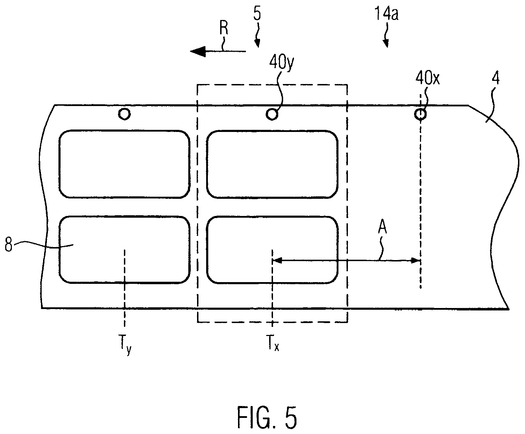

Fig. 5 zeigt eine Draufsicht auf die Formstation. In der Formstation 5 werden zwei Mulden 8 des Taktes Tx erzeugt und die Vorrichtung 14a formt ein Referenzelement 40x in Form einer Noppe mit einem Durchmesser von beispielsweise 3 mm in die Unterfolie 4. In einem zuvor stattgefunden Arbeitstakt wurden Mulden 8 eines Taktes Ty und ein Referenzelement 40y erzeugt.

Da das jeweilige Referenzelement 40x, 40y einen Abstand A stromaufwärts der Mulden 8 in Produktionsrichtung R aufweist, kann das Referenzelement 40x, 40y außerhalb bzw. vor der Siegelstation 9 erfasst werden, nachdem sich die zugehörigen Mulden 8 in der Siegelstation befinden. Dabei ist die Vorschubbewegung abgeschlossen und die Mulden 8 sowie das Referenzelement 40x, 40y stehen still. Die Kamera 15a hat einen definierten Abstand zur Siegelstation 9 und dieser Abstand kann in die Steuerung 16 eingegeben werden und wird entsprechend verrechnet. In der Kamera 15a wird ein Referenzbild des Referenzelements 40x, 40y hinterlegt bzw. eingelernt. Eine Abweichung der aktuellen Lage des Referenzelements 40x, 40y gegenüber dem Referenzbild wird zusammen mit dem Abstand der Kamera 15a zur Siegelstation 9 und dem Abstand A des Referenzelements 40x zu den Mulden 8 in der Steuerung 16 verrechnet und die Siegelstation 9 so positioniert, dass sich die anschießend erzeugte Siegelnaht 41 in einer exakten Lage zu den Mulden 8 befindet.

Der Abstand A kann beispielsweise der Abstand vom Mittelpunkt einer kreisrunden Noppenverformung des Referenzelements 40x zur Mittelachse der Mulden 8 des Taktes Tx sein. Es sind aber weitere alternative Definitionen des Abstands A zwischen dem Referenzelement 40x und Mulden 8 des Taktes Tx denkbar.

Das Referenzelement 40x kann verschiedene Formen aufweisen, vorzugsweise zentrische Formen wie ein Kreis bzw. eine kreisrunde Noppe, die nach oben oder unten in die Unterfolie 4 geformt ist. Denkbar sind auch Stanzungen, dabei bevorzugt kreisrunde Lochstanzungen.

## Patentansprüche

1. Tiefziehverpackungsmaschine (1), umfassend eine Formstation (5) zum Formen von Mulden (8) in eine Unterfolie (4), eine Siegelstation (9) und eine Steuerung (16), wobei die Siegelstation (9) eine Verstelleinrichtung (17) für ein Verstellen ihrer Position entlang einer Produktionsrichtung (R) und eine Wegmesseinrichtung (26) aufweist, wobei die Tiefziehverpackungsmaschine (1) dazu eingerichtet ist, taktweise mit einer Vorschublänge (V) pro Arbeitstakt betrieben zu werden, wobei eine Vorrichtung (14a) zum Einbringen eines Referenzelements (40x, 40y) in die Unterfolie (4) vorgesehen ist, **dadurch gekennzeichnet, dass** an der Siegelstation (9) oder innerhalb einer Vorschublänge (V) stromaufwärts der Siegelstation (9) ein Messsystem (15a) zum Ermitteln der Lage des Referenzelements (40x, 40y) vorgesehen ist, wobei die Steuerung (16) dazu konfiguriert ist, die Position der Siegelstation (9) entsprechend der ermittelten Lage des Referenzelements (40x, 40y) zu den Mulden (8) mittels der Verstelleinrichtung (17) zu regeln, wobei die Vorrichtung (14a) vor der Formstation (5) angeordnet und konfiguriert ist, um in definierter Lage relativ zu den Mulden (8) ein Referenzelement (40x, 40y) in die Unterfolie (4) einzubringen, wobei mittels einer Erfassung des Referenzelements (40x, 40y) über das Messsystem (15a) die Lage der Mulden (8) erfassbar ist.

2. Tiefziehverpackungsmaschine nach Anspruch 1, **dadurch gekennzeichnet, dass** das Messsystem (15a) zum berührungslosen Ermitteln der Lage des Referenzelements (40x, 40y) vorgesehen ist.

3. Tiefziehverpackungsmaschine nach einem der vorangehenden Ansprüche, **dadurch gekennzeichnet, dass** das Messsystem (15a) eine Kamera aufweist.

4. Tiefziehverpackungsmaschine nach einem der vorangehenden Ansprüche, **dadurch gekennzeichnet, dass** die Wegmesseinrichtung (26) ein magnetostriktiver Lineargeber ist.

5. Tiefziehverpackungsmaschine nach einem der vorangehenden Ansprüche, **dadurch gekennzeichnet, dass** ein Verstellweg der Siegelstation (9) bis 1000 mm vorgesehen ist.

6. Tiefziehverpackungsmaschine nach einem der vorangehenden Ansprüche, **dadurch gekennzeichnet, dass** ein weiteres Messsystem (19) zum berührungslosen Ermitteln der Lage der Mulden (8), die in einem nächsten Arbeitstakt (Tz) der Schneidstation (11) zugeführt werden, vorgesehen ist und dass die Steuerung (16) dazu konfiguriert ist, die Schneidstation (11) entsprechend der ermittelten Lage der Mulden (8) taktgenau in ihrer Position zu den Mulden (8) mittels einer weiteren Verstelleinrichtung zu regeln.

7. Tiefziehverpackungsmaschine nach einem der vorangehenden Ansprüche, **dadurch gekennzeichnet, dass** die Formstation (5) und/oder die Siegelstation (9) in eine Werkzeugwechselposition verfahrbar ist.

8. Tiefziehverpackungsmaschine nach einem der vorangehenden Ansprüche, **dadurch gekennzeichnet, dass** die Steuerung (16) dazu konfiguriert ist, Sollpositionen der Formstation (5) und/oder der Siegelstation (9) in Rezepten in der Steuerung (16) einzugeben und abzuspeichern.

9. Verfahren zum Betrieb einer Tiefziehverpackungsmaschine (1), die eine Formstation (5) zum Formen von Mulden (8) in eine Unterfolie (4), eine Siegelstation (9), und eine Steuerung (16) umfasst, wobei eine vor der Formstation (5) angeordnete Vorrichtung (14a) ein Referenzelement (40x, 40y) in die Unterfolie (4) einbringt, das einen definierten und gleichbleibenden Abstand (A) gegenüber den Mulden (8) der zugehörigen Takte (Tx, Tx) hat, wobei mittels eines Messsystems (15a) die Lage des Referenzelements (40x, 40y) derjenigen Mulden (8) ermittelt wird, die sich bereits in der Siegelstation (9) befinden und ihre Vorschubbewegung abgeschlossen haben, wobei das Messsystem (15a) durch das Erfassen des Referenzelements (40x, 40y) eine Information bereitstellt, auf Grund derer die Steuerung (16) die Lage der Mulden (8) ermittelt, wobei die Steuerung (16) mittels einer Verstelleinrichtung (17) die Siegelstation (9) in einer vorgegebenen Position zu dem Referenzelement (40x, 40y) positioniert, und wobei die Steuerung (16) mittels einer längs zur Produktionsrichtung (R) ausgerichteten Wegmesseinrichtung (26) der Verstelleinrichtung (17) die Postion der Siegelstation (9) erfasst.

## Claims

1. Thermo-forming packaging machine (1) comprising a forming station (5) for forming trays (8) into a base film (4), a sealing station (9) and a control unit (16), where said sealing station (9) comprises an adjustment device (17) for adjusting the position of the sealing station along a direction of production (R) and a displacement measuring device (26), where said thermo-forming packaging machine (1) is adapted to be operated intermittently with a feed length (V) for every work cycle, wherein a device (14a) is provided for introducing a reference element (40x, 40y) into said base film (4),**characterized in that** a measuring system (15a) is provided at said sealing station (9) or within a feed length (V) upstream of said sealing station (9) for determining the position of said reference element (40x, 40y), where said control unit (16) is configured to control the position of said sealing station (9) according to the detected location of said reference element (40x, 40y) relative to said trays (8) using said adjustment device (17), wherein the device (14a) is disposed upstream of said forming station (5) and is configured to introduce a reference element (40x, 40y) into said base film (4) at a defined location relative to said trays (8), where the location of said trays (8) is detectable by detecting said reference element (40x, 40y) via said measuring system (15a).

2. Thermo-forming packaging machine according to claim 1, **characterized in that** said measuring system (15a) is provided for contactless determination of the location of said reference element (40x, 40y).

3. Thermo-forming packaging machine according to one of the preceding claims, **characterized in that** said measuring system (15a) comprises a camera.

4. Thermo-forming packaging machine according to one of the preceding claims, **characterized in that** said displacement measuring device (26) is a magnetostrictive linear transducer.

5. Thermo-forming packaging machine according to one of the preceding claims, **characterized in that** an adjustment range of said sealing station (9) is provided of up to 1000 mm.

6. Thermo-forming packaging machine according to one of the preceding claims, **characterized in that** a further measuring system (19) is provided for contactless determination of the location of said trays (8) being supplied to said cutting station (11) in a following work cycle (Tz) and that said control unit (16) is configured to control said cutting station (11) according to the determined location of said trays (8) in a true-to-cycle manner in its position relative to said trays (8) using a further adjustment device.

7. Thermo-forming packaging machine according to one of the preceding claims, **characterized in that** said forming station (5) and/or said sealing station (9) are movable into a tool exchange position.

8. Thermo-forming packaging machine according to one of the preceding claims, **characterized in that** said control unit (16) is configured to enter and store target positions of said forming station (5) and/or said sealing station (9) in formulae in said control unit (16).

9. Method for operating a thermo-forming packaging machine (1) comprising a forming station (5) for forming trays (8) into a base film (4), a sealing station (9), and a control unit (16), wherein a device (14a) arranged upstream of the forming station (5) introduces a reference element (40x, 40y) into said base film (4), said reference element (40x, 40y) having a defined and same distance (A) to said trays (8) of the associated cycles (Tx, Ty), wherein the location of said reference element (40x, 40y) of those trays (8) which are already located in the sealing station (9) and have terminated their advance movement is determined by a measuring system (15a), wherein said measuring system (15a) provides information by detecting said reference element (40x, 40y) based on which said control unit (16) determines the location of said trays (8), where said control unit (16) positions said sealing station (9) in a predetermined position relative to said reference element (40x, 40y) using an adjustment device (17), and wherein said control unit (16) detects the position of said sealing station (9) using a displacement measuring device (26) of said adjustment device (17) aligned longitudinally along the direction of production (R).

## Revendications

1. Machine d'emballage par emboutissage ou thermoformage (1), comprenant un poste de formage (5) destiné à former des cavités (8) dans une feuille inférieure (4), un poste de scellage (9) et une commande (16), le poste de scellage (9) comportant un dispositif de déplacement (17) pour assurer un déplacement de sa position le long d'une direction de production (R), et un dispositif de mesure de déplacement (26), et la machine d'emballage par emboutissage ou thermoformage (1) étant conçue pour un fonctionnement cyclique avec une longueur d'avancement (V) par cycle de travail, machine d'emballage dans laquelle il est prévu un dispositif (14a) pour insérer un élément de référence (40x, 40y) dans la feuille inférieure (4), **caractérisée en ce que** dans le poste de scellage (9) ou à l'intérieur d'une longueur d'avancement (V), en amont du poste de scellage (9), il est prévu un système de mesure (15a) pour déterminer la position de l'élément de référence (40x, 40y), la commande (16) étant configurée pour régler la position du poste de scellage (9) par rapport aux cavités (8), au moyen du dispositif de déplacement (17), conformément à la position de l'élément de référence (40x, 40y) ayant été déterminée, le dispositif (14a) étant agencé avant le poste de formage (5) et configuré pour insérer un élément de référence (40x, 40y) dans la feuille inférieure (4), dans une position définie par rapport aux cavités (8), et la détection de l'élément de référence (40x, 40y) par l'intermédiaire du système de mesure (15a) permettant de relever la position des cavités (8).

2. Machine d'emballage par emboutissage ou thermoformage selon la revendication 1, **caractérisée en ce que** le système de mesure (15a) est prévu pour la détermination sans contact de la position de l'élément de référence (40x, 40y).

3. Machine d'emballage par emboutissage ou thermoformage selon l'une des revendications précédentes, **caractérisée en ce que** le système de mesure (15a) comporte une caméra.

4. Machine d'emballage par emboutissage ou thermoformage selon l'une des revendications précédentes, **caractérisée en ce que** le dispositif de mesure de déplacement (26) est un capteur linéaire magnétostrictif.

5. Machine d'emballage par emboutissage ou thermoformage selon l'une des revendications précédentes, **caractérisée en ce qu'**il est prévu un déplacement du poste de scellage (9) jusqu'à 1000 mm.

6. Machine d'emballage par emboutissage ou thermoformage selon l'une des revendications précédentes, **caractérisée en ce qu'**il est prévu un autre système de mesure (19) pour la détermination sans contact de la position des cavités (8), qui sont transmises dans un cycle de travail suivant (Tz) au poste de découpage (11), et **en ce que** la commande (16) est configurée pour régler la position du poste de découpage (11) conformément à la position des cavités (8) ayant été déterminée, de manière précise pour le cycle considéré, dans sa position par rapport aux cavités (8), au moyen d'un autre dispositif de déplacement.

7. Machine d'emballage par emboutissage ou thermoformage selon l'une des revendications précédentes, **caractérisée en ce que** le poste de formage (5) et/ou le poste de scellage (9) peut être déplacé dans une position de changement d'outillage.

8. Machine d'emballage par emboutissage ou thermoformage selon l'une des revendications précédentes, **caractérisée en ce que** la commande (16) est configurée pour la saisie et la mémorisation de positions de consigne du poste de formage (5) et/ou du poste de scellage (9), dans des formules, dans la commande (16).

9. Procédé pour faire fonctionner une machine d'emballage par emboutissage ou thermoformage (1), qui comprend un poste de formage (5) pour assurer le formage de cavités (8) dans une feuille inférieure (4), un poste de scellage (9) et une commande (16), procédé d'après lequel un dispositif (14a) agencé avant le poste de formage (5), insère dans la feuille inférieure (4), un élément de référence (40x, 40y), qui présente une distance (A) définie et restant identique par rapport aux cavités (8) des cycles correspondants (Tx, Ty), d'après lequel à l'aide d'un système de mesure (15a), on détermine la position de l'élément de référence (40x, 40y) des cavités (8) qui se trouvent déjà dans le poste de scellage (9) et ont déjà achevé leur mouvement d'avance,
d'après lequel le système de mesure (15a), grâce à la détection de l'élément de référence (40x, 40y), fournit une information sur la base de laquelle la commande (16) détermine la position des cavités (8),
d'après lequel la commande (16), à l'aide d'un dispositif de déplacement (17), positionne le poste de scellage (9) dans une position prédéterminée par rapport à l'élément de référence (40x, 40y),
et d'après lequel la commande (16) relève la position du poste de scellage (9) à l'aide d'un dispositif de mesure de déplacement (26) du dispositif de déplacement (17), qui est orienté le long de la direction de production (R).
